# EUROPEAN PATENT SPECIFICATION

(11) **EP 0 287 396 B1**
(45) Date of publication and mention of the grant of the patent: **08.09.1993**
(21) Application number: 88303434.0
(22) Date of filing: 15.04.1988
(51) Int. Cl.: C08L 81/02

(54) **Polyarylene thioether composition**
Polyarylenthioäther-Zusammensetzung
Composition de thioéther de polyarylène

(30) Priority: 17.04.1987 JP 94464/87
(43) Date of publication of application: 19.10.1988
(73) Proprietor: KUREHA KAGAKU KOGYO KABUSHIKI KAISHA, Chuo-ku Tokyo 103 (JP)
(72) Inventor: Ichikawa, Yukio, Iwaki-shi Fukushima-ken (JP); Kaneko, Takashi, Iwaki-shi Fukushima-ken (JP); Satake, Yoshikatsu, Iwaki-shi Fukushima-ken (JP); Katto, Takayuki, Iwaki-shi Fukushima-ken (JP)
(74) Representative: Woods, Geoffrey Corlett

(56) References cited:
- EP-A- 0 189 895

## Description

The present invention relates to a polyarylene thioether (hereinafter referred to as "PATE") composition. Hereinafter, melting point is referred to as "Tm" and melt crystallizing temperature is referred to as "Tc₂".

PATE is a heat-resistant, chemical-resistant and flame-resistant thermoplastic resin. Since PATE is crystalline, PATE can be melt processed by, for example, injection molding or extrusion molding. A characteristic of PATE is that molded products thereof possess excellent physical properties such as dimensional stability, strength, hardness and insulating property.

Taking advantage of this characteristic, PATE is used in the fields of, for example, electricity, electronics, cars, aeroplanes, precision machinery and chemical engineering.

However, conventional PATE has a defect that its crystallization rate is low. Accordingly PATE often contains coarse spherulites.

Because of this defect, when PATE is fabricated, for example by injection molding, there have been problems such as long molding cycle, many occurrence of flashes and poor mechanical properties of the molded products.

The present invention provides a polyarylene thioether composition comprising a polyarylene thioether (A) which contains not less than 70 wt% of a repeating unit 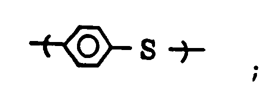
and 0.01 to 15 parts by weight, per 100 parts by weight of the said polyarylene thioether (A), of a polyarylene thioether (B) as a nucleating agent, the said polyarylene thioether (B) containing not less than 50 wt% of a repeating unit 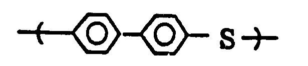
and having a melting point of not lower than 290°C or a melting crystallization temperature of not lower than 220°C.

The present invention additionally provides a method of preparing a composition as defined above, which comprises adding the said polyarylene thioether (B) to said polyarylene thioether (A).

The present invention also provides a method of molding an article, which method comprises molding the said article from a composition as defined above.

The use of PATE (B) as a nucleating agent produces an excellent effect, namely an improvement of the crystallization rate and reduction in spherulite size.

A melt molded product of the PATE composition of the present invention has fine spherulites and a high crystallization rate. The PATE composition of the present invention can produce a molded product having a high strength with a short cycle of melt molding. The PATE composition of the present invention is suitable for various processings such as inflation molding, injection molding, compression molding and blow molding, particularly injection molding.

Although PATE generally is a polymer having a repeating unit (̵Ar-S)̵ (wherein Ar is an arylene group) as a constituent, PATE (A) in the present invention has a paraphenylene group as the main constituent among the arylene groups.

The words "has a paraphenylene group as the main constituent" means that the PATE contains paraphenylene groups in an amount of not less than 70 wt%, preferably not less than 75 wt%, of all the arylene groups in it.

PATE (A) having a paraphenylene group as the main constituent is used from the viewpoint of physical properties of the composition such as heat-resistance, moldability and mechanical properties.

As an arylene group other than a paraphenylene group, a m-phenylene group, 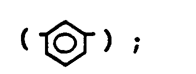
o-phenylene group, 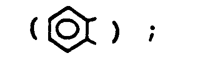
alkyl-substituted phenylene group, 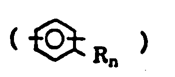
(R is an alkyl group, preferably a lower alkyl group and n is an integer of 1 to 4); p,p'-diphenylene sulfone group, 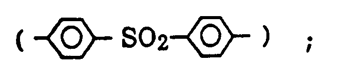
p,p'-diphenylene ether group, 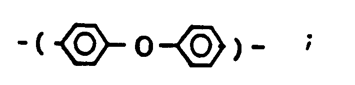
p,p'-diphenylene carbonyl group, 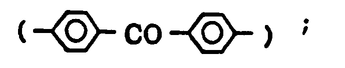
or naphthalene group, 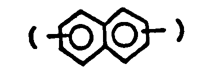
can, for example, be used. These phenylene groups and naphthalene group may be substituted by 1 to 4 alkyl groups having 1 to 5 carbon atoms.

From the viewpoint of processability, a copolymer containing different repeating units is preferable, in some cases, to a homopolymer consisting only of the repeating unit 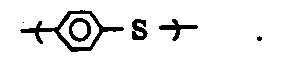
A copolymer of 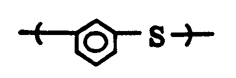
and 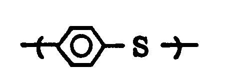
is preferred. Particularly, those containing the respective repeating units in block form are preferred to those containing them in random (for instance as described in EP-A-166,451).

The block copolymer described in EP-A-166,451 consists of repeating units 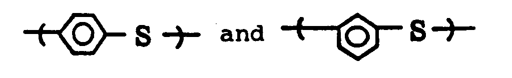
wherein (i) blocks having 20 to 5,000 repeating units 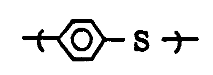
exist in the molecular chain, (ii) the molar fraction is from 0.50 to 0.98, (iii) the melt viscosity, η*, measured at a temperature of 310°C and a shear rate of 200/second is 50 to 100,000 poise (5 to 10,000 Pas), (iv) the glass transition point is 20 to 80°C, and (v) the crystalline melting point is 250 to 285°C.

The reason why a block copolymer is preferred to a random copolymer is because the block-copolymer has remarkably excellent physical properties (e.g. heat resistance and mechanical property), although the block- and random- copolymers are substantially equal in their processabilities. 5 to 30 wt% of repeating unit 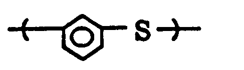
in the block copolymer is preferable and 10 to 25 wt% is particularly preferable.

PATE (A) having a substantially linear structure is preferred from the viewpoint of physical properties.

However, within a range of not spoiling the physical properties of the molded products, a cross-linked PATE obtained by using a minute amount of a cross-linking agent (for instance 1,2,4-trihalobenzene) during polymerization is allowable. A PATE (A) which is not thermally cross-linked is preferable. A PATE which is thermally cross-linked has many branched and cross-linked structures and its molded product is poor in mechanical properties and is severely colored and the thermal stability of the composition during melt processing is low. Accordingly such a PATE is not preferable from the viewpoint of physical properties, processability of the composition and physical properties of the molded product.

A PATE (A) having a melting point of over 250°C is preferable. When the melting point is below 250°C, its greatest characteristic feature as a heat-resistant polymer is spoiled.

A PATE which is favourable for the present invention can generally be manufactured by bringing an alkali metal sulfide (for instance sodium sulfide) and a halo-aromatic compound consisting mainly of paradihalobenzene into a dehalogenation- and sulfidation-reaction in an aprotic, organic polar solvent [for instance, N-methylpyrrolidone (hereinafter referred to as "NMP")]. Such a PATE can be economically manufactured by the method described in US-A-4,645,826.

The method described in US-A-4,645,826 prepares PAS of high molecular weight by reacting an alkali metal sulfide with a dihaloaromatic compound in an organic amide solvent, comprising the two steps of:
(1) carrying out the reaction at a temperature of from 180 to 235°C in the presence of 0.5 to 2.4 mol of water per mol of alkali metal sulfide to produce a poly(arylene sulfide) having a melt viscosity of 5 to 300 poise (0.5 to 30 Pas) at a conversion ratio of 50 to 98 mol%; and
(2) continuing the reaction (1) while increasing the water content to from 2.5 to 7.0 mol per mol of alkali metal sulfide and raising the temperature to from 245 to 290°C.

As another method, the method of obtaining a high molecular weight PATE by adding a large amount of a polymerization aid, such as a salt of carboxylic acid, can be used (refer to US-A-3,919,177). However, this method is disadvantageous from an economical stand point.

The polymer used as a nucleating agent (hereinafter referred to as "nucleating polymer") in the present invention is also a PATE containing an arylene group (Ar) in the repeating unit (̵Ar-S)̵ . It particularly contains a p,p'-diphenylene group 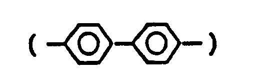
as a constituent.

Such a nucleating polymer has a Tm of not lower than 290°C, preferably not lower than 330°C, more preferably not lower than 350°C or a Tc₂ of not lower than 220°C, preferably not lower than 240°C, more preferably not lower than 250°C. If the Tm is lower than 290°C and the Tc₂ is lower than 220°C, the nucleating effect, namely the improvement of crystallization rate and micronization of spherulite size, is insufficient.

In determining Tm and Tc₂, a DSC (differential scanning calorimeter) is used. Tm is the peak melting temperature when the temperature is raised at a rate of 10°C/minute and Tc₂ is the peak crystallization temperature when the temperature is raised to Tm + 50°C and cooled at a rate of 10°C/minute.

An arylene thioether group as a component other than the main component of the nucleating polymer can be, for example, the various arylene groups described above in relation to PATE (A).

A nucleating polymer consisting only of the arylene thioether group, 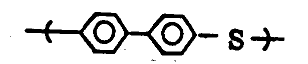
is particularly preferable because it has a Tm of 400 to 450°C and a Tc₂ of 280 to 350°C and has a remarkably excellent nucleating effect. However, polymers consisting of this specific arylene thioether group and other arylene thioether groups are also usable if their Tm and Tc₂ satisfy the above conditions. In this case, the amount of this specific arylene thioether unit in the polymer is not less than 50 wt%, preferably not less than 55 wt%. If the amount is less than 50 wt%, the effect as a nucleating polymer is insufficient.

Among arylene thioether groups other than the specific arylene thioether group, less than 50 wt% of paraphenylene thioether groups are preferable, and less than 45 wt% of the groups are more preferable.

The amount of nucleating polymer added according to the present invention is 0.01 to 15 parts, preferably 1 to 15 parts, more preferably 1 to 12 parts, by weight per 100 parts by weight of PATE (A). If it is added in an amount of less than 0.01 parts by weight, the nucleating effect is poor, while addition of more than 15 parts by weight does not increase the nucleating effect in proportion to the amount.

The nucleating polymer can be added by any method. For instance, a method of adding the nucleating polymer as it is or in the form of dispersion to a powder PATE (A) (when a solvent is used, the solvent is removed after the addition to PATE (A)), a method of adding a nucleating polymer at the time of molding, or a method of adding a nucleating polymer to a slurry of PATE (A) after the polymerization and removing water from the mixture, may be adopted. It is also possible to prepare what is called a master batch by mixing more than a predetermined amount of nucleating polymer with PATE (A) and kneading the master batch with the PATE (A) to a predetermined concentration of the nucleating polymer.

The composition of the present invention comprises PATE (A), PATE (B) as a nucleating agent and, when necessary, a filler.

The words "comprises" means that the composition may contain supplementary component(s) unless the addition of the component is contrary to the purpose of the present invention.

Further, the composition of the present invention includes not only the material formed by mixing each component as a powder but also the material in which the resin component is in a coherent state formed through its molten state. The coherent state is the representative one and is generally prepared as pellets. The powdery composition can be produced by uniformly mixing all components with a blender, a mixer or a mill.

The 50% crystallization time, τ_{½}, at 250°C of the composition of the present invention is not more than 1/1.5, usually not more than 1/3, of the 50% crystallization time of the polyarylene thioether composition without the said polyarylene thioether (B). The method of measuring τ_{½} is described later.

A PATE composition of the present invention can be applied to various melt processings by itself, but it can also be used as a blend by mixing (i) as fibrous filler such as glass fiber, carbon fiber, silica fiber, alumina fiber, silicon carbide fiber, zirconia fiber, calcium titanate fiber, wollastonite, calcium sulfate fiber and aramide fiber, and/or (ii) an inorganic powdery filler such as talc, mica, clay, kaolin, calcium carbonate, magnesium carbonate, calcium silicate, magnesium silicate, silica, alumina, titanium white, carbon black, calcium sulfate, iron oxide, Zinc oxide and copper oxide with the PATE composition.

Furthermore, a PATE composition of the present invention can be used as a blend with one or more selected from (iii) synthetic resins such as polyolefin, polyester, polyamide, polyimide, polyether imide, polycarbonate, polyphenylene ether, polyether sulfone, polysulfone, polyether etherketone, polyarylene, polyacetal, polyvinylidene fluoride, polyethylene tetrafluoride, polystyrene, ABS resin, epoxy resin, urethane resin, silicone resin and phenol resin and (iv) elastomers such as polyolefin rubber, fluorine rubber, silicone rubber, hydrogenated SBR, butyl rubber, polyester rubber and polyamide rubber.

It is also possible further to add an additive such as a coupling agent, anti-oxidizing agent, coloring agent, ultraviolet absorber and wax, if necessary.

In order to utilize the characteristic of a PATE composition of the present invention effectively, it is preferable that the blend contains at least 25 vol%, more preferably not less than 30 vol%, particularly preferably not less than 50 vol%, of PATE (A).

An example of such a blend contains 0.01 to 15 parts by weight of nucleating polymer and 0.1 to 300 parts by weight of an inorganic filler and/or a fibrous filler based on 100 parts by weight of PATE (A). Of course, this blend may further contain the above synthetic resin (iii) and/or elastomer (iv).

A PATE composition (including a blend) of the present invention is applicable to various fields by taking advantage of its characteristics such as high crystallization rate and fine spherulites. For example, it can preferably be processed to various products by injection molding and sheets, films, pipes and fibers by extrusion molding. Because of its short melt molding cycle, injection molding is especially preferable.

### EXAMPLES

### Methods of measuring

### (1) Measurement of crystallization rate

The 50% crystallization time, τ_{½}, was obtained by an ordinary method [e.g., a method described on p. 155 of KOBUNSHI KAGAKU. 25 (1968)] using DSC7 manufactured by Perkin Elmer.

The measuring conditions were as follows:
After melting about 10 mg of rapidly cooled press sheet of each sample at 340°C in a nitrogen gas flow for one minute, it was rapidly cooled to its crystallization temperature and an isothermal crystallization curve at the temperature was obtained.

From the isothermal crystallization curve, the time necessary for crystallizing half of the crystallizable components, τ_{½}, was obtained.

A short 50% crystallization time means a high crystallization rate.

### (2) Measurement of spherulite size

After melting the rapidly cooled press sheet of each sample at 340°C in a nitrogen gas flow for one minute, it was rapidly cooled to 250°C to be isothermally crystallized. The size of spherulites, at the time they collided with each other under an isothermal crystallization, was measured by a polarizing microscope provided with a heating stage (cooling and heating device, TH-600, for microscope, manufactured by Lincam Co.).

### (3) Measurement of melt viscosity

The melt viscosity was measured by using a capillograph, manufactured by TOYO SEIKI, under the following conditions:
temperature: 310°C
nozzle: L/D = 10mm/1mm
shear rate: 200/second or 10,000/second

### (a) Preparation of

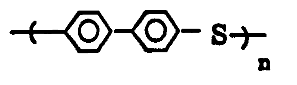

polymer (hereinafter referred to as "PBS")

A polymer represented by the formula 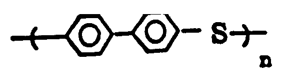
was obtained by polymerizing 4,4'-dibromobiphenyl and Na₂S in the presence of H₂0 and NMP in the following mol ratio at 220°C for 5 hours:

| | |
|---|---|
| 4,4'-dibromobiphenyl | 0.50 mol |
| Na₂S | 0.50 mol |
| H₂O | 0.75 mol |
| NMP | 5.0 mol |

The Tm of the obtained polymer was 430°C and the Tc₂ was 300°C.

### (b) Production of PBS copolymer

A random copolymer of 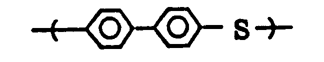
and 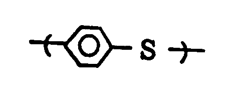
(hereinafter referred to as "PBS copolymer") was obtained by polymerizing 4,4'-dibromobiphenyl, paradichlorobenzene and Na₂S in the presence of H₂O, NMP and NaOH in the following mol ratio of 220°C for 5 hours:

| | |
|---|---|
| 4,4'-dibromobiphenyl | 0.25 mol |
| paradichlorobenzene | 0.25 mol |
| Na₂S | 0.50 mol |
| H₂0 | 0.75 mol |
| NMP | 5.0 mol |
| NaOH | 2.0 g |

The Tm of the obtained polymer was 370°C.

### Example 1

42.4 kg of hydrated sodium sulfide (purity: 46.18% and 95 kg of NMP were charged into an autoclave, and the content was heated to about 190°C to distill out 10.5 kg of water. Then, 36.4 kg of p-dichlorobenzene was added to the mixture and polymerized at 220°C for 5 hours.

7 kg of water was additionally charged, the temperature was raised to 255°C and the polymerization was performed for 5 hours.

The polymer was separated from the reaction mixture with a screen, washed with methanol and then water, further washed with an aqueous 2% solution of NH₄Cl and water and then dried to obtain PATE (A).

The apparent melt viscosity at 310°C and at a shear rate of 200/second of the PATE (A) was 2,300 poise (230 Pas).

To the powdery polymer [PATE (A)], each of the nucleating polymers listed in Table 1 was added and mixed by a Henshell mixer. The mixture was extruded into pellets by an extruder (BT-30, manufactured by Plabor, Co.).

The physical properties of the compositions obtained were measured and the results are shown in Table 1.

As is clear from Table 1, the PATE compositions of the present invention have a very high crystallization rate. The nucleating polymer used in the present invention is also effective on a blend containing glass fibers.

### Example 2

**Table 1**

| | Amount of PBS (parts by weight) *1) | τ_{½} at 250°C (second) | |
|---|---|---|---|
| | | Without GF | With GF*2) |
| Control | 0 | 185 | 370 |
| Experiment 1 | 1.0 | 40 | 31 |
| Experiment 2 | 12 | 38 | 30 |

| | | | |
|---|---|---|---|
| *1) Amount based on 100 parts by weight of PATE (A) | | | |
| *2) GF: Glass Fiber, 13 µm in diameter (manufactured by NITTO BOSEKI Co., Ltd.). 40 wt% added based on the total weight of the composition. | | | |

42.4 kg of hydrated sodium sulfide (purity: 46.0%) and 100 kg of NMP were charged into an autoclave and the contents were heated to about 190°C to distil out 16.5 kg of water. Then, 40.9 kg of paradichlorobenzene was added to the mixture and the polymerization was performed at 220°C for 5 hours.

7.7 kg of water was additionally charged, the temperature was raised to 260°C and the polymerization was further performed for another 3 hours.

The polymer was separated from the reaction mixture with a screen, washed with methanol and then water, further washed with an aqueous 2% solution of NH₄Cl and water and then dried to obtain PATE (A).

The apparent melt viscosity at 310°C and a shear rate of 10,000/second of the PATE (A) was 30 poise (3 Pas).

To 100 parts by weight of the powdery PATE (A) polymer, 1.0 part by weight of the nucleating polymer listed in table 2 was added and mixed by a Henshell mixer. The mixture was extruded into pellets by an extruder, BT-30.

The physical properties of the compositions obtained were studied and the results are in Table 2.

**Table 2**

| | Nucleating Polymer | τ_{½} at 260°C (second) | Size of Spherulite (µm) |
|---|---|---|---|
| Control | None | 610 | 170 |
| Experiment | PBS | 20 | 10 |

As is clear from Table 2, the PATE composition of the present invention shows a very high crystallization rate and the size of spherulite is small and uniform.

### Example 3

42.1 kg of hydrated sodium sulfide (purity: 46.3%) and 97 kg of NMP were charged into an autoclave and the contents were heated to about 190°C to distil out 16.9 kg of water. Then, 36.8 kg of p-dichlorobenzene was added to the mixture and the polymerization was performed at 220°C for 5 hours.

6.1 kg of water was additionally charged, the temperature was raised to 260°C and the polymerization was performed for 1.5 hours and further at 240°C for 3.5 hours.

The polymer was separated from the reaction mixture with a screen, washed with methanol and then water and then dried to obtain a PATE (A).

The apparent melt viscosity at 310°C and a shear rate of 200/second of the PATE (A) was 1,500 poise (150 Pas).

To 100 parts by weight of the powdery PATE (A) polymer, 1.0 part by weight of the nucleating polymer listed in Table 3 was added and mixed by a Henshell Mixer. The mixture was extruded into pellets by an extruder.

The physical properties of the compositions obtained were measured and the results are in Table 3.

**Table 3**

| | Nucleating Polymer | τ_{½} at 250°C (second) |
|---|---|---|
| Control | None | 2,100 |
| Experiment | PBS | 49 |

As is clear from Table 3, the composition of the present invention has a very high crystallization rate even when prepared from the PATE (A) which had not been treated with NH₄Cl after polymerization and has a very slow crystallization rate.

### Example 4

4 kg of NMP and 1.87 kg of hydrated sodium sulfide (purity: 45.9%) were charged into a polymerizer and the contents were heated to about 200°C to distil out 0.77 kg of water.

Then, 1.55 kg of metadichlorobenzene, 2.11 kg of NMP and 0.05 kg of H₂O were added to the mixture and the polymerization was performed at 220°C for 2 hours and further at 230°C for 7 hours to obtain a slurry of polymetaphenylene sulfide.

Separately, 7.5 kg of NMP and 3.06 kg of hydrated sodium sulfide (purity: 45.9%) were charged into an autoclave and the contents were heated to about 200°C to distill out 12.7 kg of water.

Then, 2.64 kg of p-dichlorobenzene, 2.5 kg of NMP, 0.1 kg of H₂O and 2.32 kg of the slurry of polymetaphenylene sulfide obtained above were added to the mixture and polymerization was performed at 220°C for 10 hours.

1.3 kg of H₂O was added and the polymerization was further performed at 260°C for 4 hours.

The polymer was separated from the reaction mixture with a screen, washed with methanol and then water, further washed with an aqueous 2% solution of NH₄Cl and water and then dried to obtain a PATE (A). The apparent melt viscosity at 310°C and a shear rate of 200/second of the PATE (A) was 1,000 poise (100 Pas).

To 100 parts by weight of the powdery PATE (A) polymer, 1.0 part by weight of each of the nucleating polymers listed in Table 4 was added and mixed by a Henshell mixer. The mixture was extruded into pellets by an extruder, BT-30.

The physical properties of the composition obtained were studied and the results are shown in Table 4.

**Table 4**

| Nucleating Polymer | τ_{½} at 250°C (second) |
|---|---|
| None | 300 |
| PBS | 55 |
| PBS Copolymer | 47 |

As is clear from Table 4, the PATE composition of the present invention also has a very high crystallization rate when the PATE (A) is a phenylene sulfide block copolymer and further, when a nucleating polymer is a copolymer, it still has the nucleating effect.

## Claims

1. A polyarylene thioether composition comprising a polyarylene thioether (A) which contains not less than 70 wt% of a repeating unit 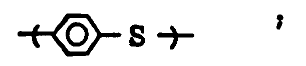 and 0.01 to 15 parts by weight, per 100 parts by weight of the said polyarylene thioether (A), of a polyarylene thioether (B) as a nucleating agent, the said polyarylene thioether (B) containing not less than 50 wt% of a repeating unit 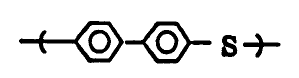 and having a melting point of not lower than 290°C or a melting crystallization temperature of not lower than 220°C.

2. A composition according to claim 1, wherein the said polyarylene thioether (A) is a block copolymer of from 70 to 95 wt% of a repeating unit 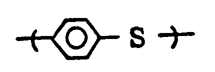 and from 5 to 30 wt% of a repeating unit

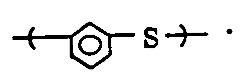

3. A composition according to claim 1 or 2, wherein the said polyarylene thioether (A) is a polyarylene thioether which has been treated with an aqueous solution of a strong acid-weak base type salt after polymerization.

4. A composition according to any one of the preceding claims, wherein the said polyarylene thioether (B) is a p,p'-diphenylene thioether homopolymer.

5. A composition according to claim 4, wherein the said p,p'-diphenylene thioether homopolymer is a polymer having a melting point of 400 to 450°C or a melt crystallization temperature of 280 to 350°C.

6. A composition according to any one of claims 1 to 3, wherein the said polyarylene thioether (B) is a copolymer containing not less than 50 wt% of p,p'-diphenylene thioether and less than 50 wt% of p-phenylene thioether.

7. A composition according to any one of the preceding claims, further comprising from 0.1 to 300 parts by weight, per 100 parts by weight of the said polyarylene thioether (A), of an inorganic filler and/or organic filler.

8. A composition according to any one of the preceding claims, further comprising a synthetic resin and/or elastomer.

9. A method of preparing a composition as defined in any one of the preceding claims, which comprises adding the said polyarylene thioether (B) to said polyarylene thioether (A).

10. A method of molding an article, which method comprises molding the said article from a composition as defined in any one of claims 1 to 8.

## Patentansprüche

1. Polyarylenthioether-Zusammensetzung aus einem Polyarylenthioether (A), der nicht weniger als 70 Gew.% einer wiederkehrenden Einheit 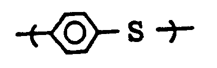 enthält, und aus 0,01 bis 15 Gew.Teilen, pro 100 Gew.Teile des genannten Polyarylenthioethers (A), eines Polyarylenthioethers (B) als Nukleierungsmittel, wobei der genannte Polyarylenthioether (B) nicht weniger als 50 Gew.% einer wiederkehrenden Einheit 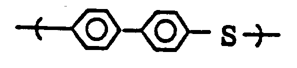 enthält und einen Schmelzpunkt von nicht weniger als 290°C oder eine Schmelzekristallisationstemperatur von nicht weniger als 220°C aufweist.

2. Zusammensetzung gemäß Anspruch 1, worin der genannte Polyarylenthioether (A) ein Blockcopolymer aus 70 bis 95 Gew.% einer wiederkehrenden Einheit 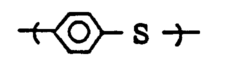 und 5 bis 30 Gew.% einer wiederkehrenden Einheit 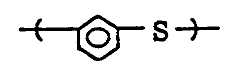 ist.

3. Zusammensetzung gemäß Anspruch 1 oder 2, worin der genannte Polyarylenthioether (A) ein Polyarylenthioether ist, der mit einer wässrigen Lösung eines Salzes vom Typ einer starken Säure-schwachen Base nach der Polymerisation behandelt worden ist.

4. Zusammensetzung gemäß jedem vorhergehenden Anspruch, worin der genannte Polyarylenthioether (B) ein p,p'-Diphenylenthioether-Homopolymer ist.

5. Zusammensetzung gemäß Anspruch 4, worin das genannte p,p'-Diphenylenthioether-Homopolymer ein Polymer mit einem Schmelzpunkt von 400 bis 450°C oder einer Schmelzekristallisationstemperatur von 280 bis 350°C ist.

6. Zusammensetzung gemäß jedem Anspruch 1 bis 3, worin der genannte Polyarylenthioether (B) ein Copolymer ist, enthaltend nicht weniger als 50 Gew.% p,p'-Diphenylenthioether und weniger als 50 Gew.% p-Phenylenthioether.

7. Zusammensetzung gemäß jedem vorhergehenden Anspruch, die ferner 0,1 bis 300 Gew.Teile, pro 100 Gew.Teile des genannten Polyarylenthioethers (A), eines anorganischen Füllstoffs und/oder organischen Füllstoffs enthält.

8. Zusammensetzung gemäß jedem vorhergehenden Anspruch, die ferner ein synthetisches Harz und/oder ein Elastomer enthält.

9. Verfahren zur Herstellung einer gemäß jedem vorhergehenden Anspruch definierten Zusammensetzung, wobei man den genannten Polyarylenthioether (B) dem genannten Polyarylenthioether (A) zufügt.

10. Verfahren zur Herstellung eines Formgegenstandes, wobei man den genannten Gegenstand aus einer gemäß jedem der Ansprüche 1 bis 8 definierten Zusammensetzung formt.

## Revendications

1. Composition de poly(thioarylène) comprenant un poly(thioarylène) (A), qui ne contient pas moins de 70 % en poids d'un motif répétitif -(p-C₆H₄-S)-, et contenant de 0,01 à 15 parties en poids, pour 100 parties en poids dudit poly(thioarylène) (A), d'un poly(thioarylène) (B), comme agent de nucléation, ledit poly(thioarylène) (B) ne contenant pas moins de 50 % en poids d'un motif répétitif -(p-C₆H₄-C₆H₄-S)-et ayant un point de fusion non inférieur à 290°C ou une température de cristallisation de la masse fondue non inférieure à 220°C.

2. Composition selon la revendication 1, dans laquelle ledit poly(thioarylène) (A) est un copolymère séquencé comprenant de 70 à 95 % en poids d'un motif répétitif -(p-C₆H₄-S)- et de 5 à 30 % en poids d'un motif répétitif -(m-C₆H₄-S)-.

3. Composition selon la revendication 1 ou 2, dans laquelle ledit poly(thioarylène) (A) est un poly(thioarylène) qui a été traité, après polymérisation, avec une solution aqueuse d'un sel d'acide fort et de base faible.

4. Composition selon une quelconque des revendications précédentes, dans laquelle ledit poly(thioarylène) (B) est un homopolymère de p,p'-thiodiphénylène.

5. Composition selon la revendication 4, dans laquelle ledit homopolymère de p,p'-thiodiphénylène est un polymère présentant un point de fusion de 400 à 450°C ou une température de cristallisation de la masse fondue de 280 à 350°C.

6. Composition selon une quelconque des revendications 1 à 3, dans laquelle ledit poly(thioarylène) (B) est un copolymère ne contenant pas moins de 50 % en poids de p,p'-thiodiphénylène et pas moins de 50 % en poids de p-thiophénylène.

7. Composition selon une quelconque des revendications précédentes, comprenant en outre de 0,1 à 300 parties en poids, pour 100 parties en poids dudit poly(thioarylène) (A), d'une charge minérale et/ou d'une charge organique.

8. Composition selon une quelconque des revendications précédentes, comprenant en outre une résine et/ou un élastomère synthétique.

9. Procédé de préparation d'une composition définie dans l'une quelconque des revendications précédentes, qui consiste à ajouter ledit poly(thioarylène) (B) audit poly(thioarylène) (A).

10. Procédé de moulage d'un article, qui consiste à mouler ledit article à partir d'une composition revendiquée dans l'une quelconque des revendications 1 à 8.
